# EUROPEAN PATENT SPECIFICATION

(11) **EP 2 085 132 B1**
(45) Date of publication and mention of the grant of the patent: **29.09.2010**
(21) Application number: 08250385.5
(22) Date of filing: 01.02.2008
(51) Int. Cl.: B01D 53/04, B01D 53/26, F24F 3/14, G01N 31/22

(54) **Regenerative dehumidifying bag**
Regenerierbarer Entfeuchtungsbeutel
Sachet déshumidifiant régénérateur

(43) Date of publication of application: 05.08.2009
(73) Proprietor: Hsu, Tsang-Hung, Tainan Hsien (TW)
(72) Inventor: Hsu, Tsang-Hung, Tainan Hsien (TW)
(74) Representative: Stoner, Gerard Patrick

(56) References cited:
- EP-A- 1 696 232
- EP-A- 1 818 091
- GB-A- 2 234 688
- US-A- 2 554 879
- US-A- 4 990 284
- US-A1- 2003 121 418
- US-B1- 6 324 896

## Description

The present invention relates to a regenerative dehumidifying bag for reducing humidity, and having a visual indicator.

U.S. Patent 6,716,276 disclosed a desiccant system including a body of water-vapor absorbing desiccant material sealed in a bag which is permeable to water vapor, and a humidity indicator secured to the bag to sense humidity within the bag. The indicator changes color when a predetermined humidity level has been reached in order to signal that the bag should be replaced.

However, such a prior art has the following drawbacks: The humidity indicator (11) is formed as a rectangular card to be adhered to an outer surface of the bag. The card-shaped indicator (11) as adhered on the bag surface may deteriorate the decorative appearance of the whole bag, thereby affecting its commercial value and art decorative effect.

The humidity indicator (11) is in the form of a self-adhesive card. It should therefore be first treated by tearing off a releasing paper as pre-adhered on a back surface of the self-adhesive indicator (11), thereby causing inconvenience for the user whenever securing the indicator on the bag surface of the desiccant system. The whole area of the indicator card may shield an appreciable surface area of the bag, thereby partially obstructing the water-vapor absorption area and lowering the dehumidification efficiency of the desiccant system. Meanwhile, when it is heated for regeneration, the adhesive may be cured to cause delamination of the indicator card from the bag.

US-B1-6 324 896 discloses a regenerative dehumidifying bag which is filled with a desiccant material and has a humidity indicator having a colour-changeable marking printed on an outer surface of the bag.

The present inventor has found the drawbacks of the prior art and therefore invented the present regenerative dehumidifying bag.

According to the present invention there is provided a regenerative dehumidifying bag according to claim 1.

The present invention will be further described with reference to the accompanying drawings, in which:
Fig. 1 is an illustration of the present invention;
Fig. 2 shows color change of the humidity indicator of the present invention as changed from Fig. 1;
Fig. 3 shows another preferred embodiment of the present invention; and
Fig. 4 shows color change of the present invention as changed from Fig. 3.

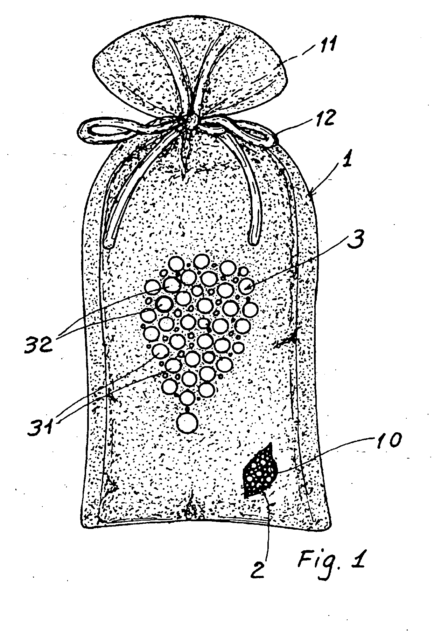

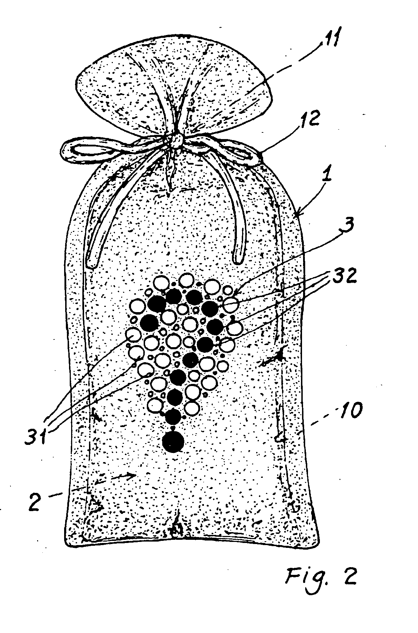

As shown in Figs. 1 and 2, a regenerative dehumidifying bag of the present invention comprises: a water-vapor permeable pouch 1; a desiccant material 2 filled in the pouch 1; and a humidity indicator 3 printed or coated on an outer surface of the pouch 1.

The pouch 1 is made of water-vapor permeable materials, including: fabric, porous flexible sheet or porous polymer layer; having capillary pores formed through the pouch cover.

The pouch 1 includes an opening 11 formed in a top portion or suitable portion of the pouch 1 for filling the desiccant material 2 into an interior 10 in the pouch 1; and a fastener 12 for fastening and closing the opening 11 of the pouch 1 for well sealing the desiccant material 2 within the pouch 1.

The capillary pores formed through the cover of the pouch 1 should each be smaller than each particle or bead of the desiccant material 2 to prevent leakage of the desiccant material from the pouch 1.

The desiccant material 2 may be selected from silica gel or other water-vapor absorbing materials, not limited in the present invention.

The humidity indicator 3 includes: a base (or background) figure 31 printed on the outer surface of the pouch 1; and at least one color-changeable marking 32.printed on the outer surface of the pouch 1 which changes color when the desiccant material is saturated by absorbing moisture through the pouch.

The color-changeable marking 32 may be disposed within the base figure 31 of the humidity indicator 3, and includes a color-changeable ink or paint comprising a cobalt (or cobaltous) chloride homogeneously dispersed in a hygroscopic plastic coat, adapted to be printed on the outer surface of the pouch 1, whereby upon saturation of moisture absorbed by the desiccant material 2 in the pouch 1, the cobalt chloride will change its color from a blue color to a pink color, indicating that the desiccant material 2 should be replaced with "fresh" one.

As shown in Figs. 2 and 1, the color-changeable marking 32 of the humidity indicator 3 is formed as a question mark which changes its color to be a pink color, thereby being distinguishable from or contrasting with the base (blue) color of the base figure 31 also printed on the pouch cover.

When the bag of the present embodiment is "dry" as first provided in a surrounding such as a cabinet, the base figure 31 and the marking 32 as made of cobalt chloride will present the same blue color. Upon saturation by absorbing enough moisture by the desiccant material and by the cobalt chloride of the indicator 3, the color-changeable marking 32, namely the Question Mark, will be present as a pink color as changed from blue color, thereby giving reminder to the user for replacing the desiccant material in the pouch.

Since the pink color as presented by the marking 32 is contrasted to the blue color of the base figure 31, it will give a remarkable warning or signal to the user to remind him or her for replacing the desiccant material, especially helpful for an efficient reminder for a user of color blindness, who may therefore easily distinguish the pink color of the marking 32 in contrast to the "background" blue color of the base figure 31.

The features of the marking or figure of the humidity indicator 3 are not limited to be that as shown in the present invention.

The humidity indicator 3 may be formed as an art figure, a decorative feature, an advertising presentation, and any other descriptive features, not limited in the present invention.

After saturation of the desiccant material in the pouch 1, it may be placed in a micro-oven, a heater, or exposed under solar radiation for regeneration of the desiccant material by vaporizing and removing the moisture as absorbed in the desiccant material.

Reversibly, when the pink color changes back to be blue, it indicates the regeneration of the desiccant material is completed.

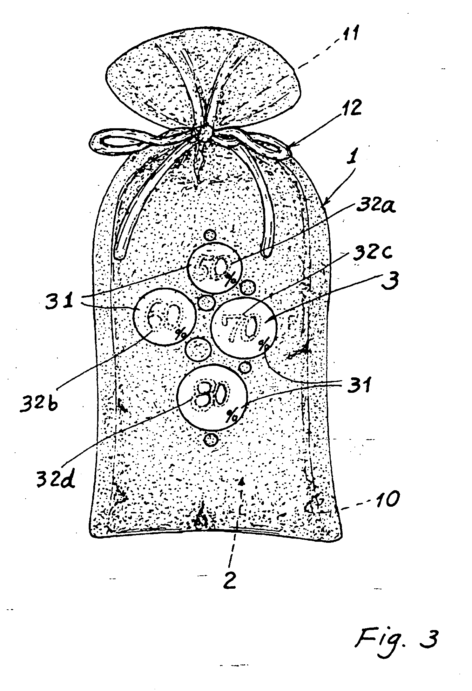

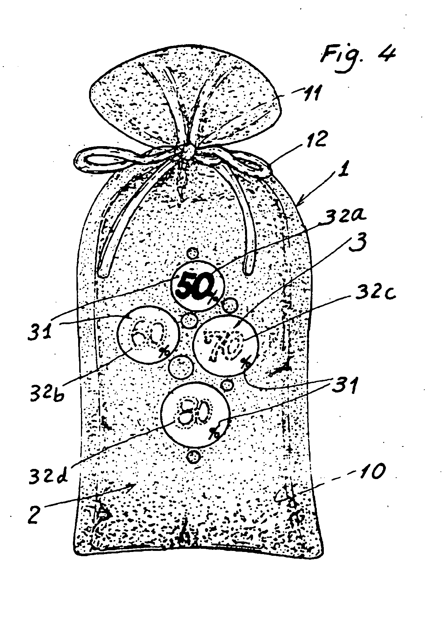

The humidity indicator 3 of the dehumidifying bag of the present invention may be further modified as shown in Figs. 3 and 4.

The humidity indicator 3 includes a plurality of color-changeable areas 32a, 32b, 32c and 32d as shown in Figs. 3 and 4 by controlling the concentrations of the ingredients in the cobalt chloride composition to formulate a plurality of cobalt chloride compositions in the humidity indicator to be respectively corresponding to different predetermined relative humidities, for example, 50%, 60%, 70% and 80% R.H. (relative humidity); or to different moisture levels in the desiccant.

Substantially, the cobalt chloride composition may include cobalt chloride (CoCl₂), zinc chloride (ZnCl₂) and magnesium chloride (MgCl₂) to be corresponding to their R.H. percentages as shown in the following table:

| CoCl₂% | ZnCl₂% | MgCl₂% | R.H.% |
|---|---|---|---|
| 4 | 0.75 | 5.0 | 50% |
| 4 | 0.75 | 3.0 | 60% |
| 5 | 1.0 | 4.0 | 70% |
| - 30 | 5.0 | 5.0 | 80% |

The above-mentioned data are digested from U.S. Patent 2,627,505, which are not formed as a part of the present invention.

By the way, if the R.H. reaches 50%, for instance, the color-changeable area 32a as shown in Fig. 4 will change its color to be pink to indicate that the replacement of desiccant material is necessary.

Accordingly, a specific value of relative humidity (R.H.) will be sensed as shown in Figs. 4 and 3 in accordance with the present invention to remind the user for a more precise checking of the moisture content in the desiccant material in the pouch.

The pouch 1 may be further added therein with activated carbon for deodorization purpose. Other ingredients such as perfume may also be incorporated therein, not limited in the present invention.

The present invention is superior to the above-mentioned prior art with the following advantages:
1. The color-changeable markings are directly printed on the pouch surface for saving production cost and for enhancing convenience use.
2. The color-changeable markings may be presented in diversified forms, such as for art decoration, advertising and any other commercial uses.
3. For regeneration, the pouch may be directly quickly and conveniently dried, just subjected to an oven heating or a solar-energy radiation.
4. By scrupulous design or lay-out of the color-changeable markings, the outer surface area of the pouch may not be greatly shielded by such markings, thereby preventing obstruction of water-vapor penetration through the pores in the pouch cover and thereby enhancing moisture permeability of the dehumidifying bag.

## Claims

1. A regenerative dehumidifying bag comprising a water vapour-permeable pouch (1), a desiccant material (2) filled in the pouch (1) for absorbing moisture through the pouch (1) for dehumidifying a surrounding wherein the pouch (1) is provided, and a colour-changeable humidity indicator (3) printed on an outer surface of the pouch (1) and fluidically communicated with the desiccant material (2) in the pouch (1);
**characterised in that**
said humidity indicator (3) includes a base figure (31) of blue colour printed on an outer surface of the pouch (1) and a colour-changeable marking (32) formed as a mark disposed within the base figure (31) of the humidity indicator (3), said colour-changeable marking (32) including a colour-changeable ink or paint comprising cobalt chloride homogeneously dispersed in a hygroscopic plastic coat and printed on the outer surface of the pouch (1), whereby upon saturation of moisture absorbed by the desiccant material (2) in the pouch (1), the marking (32) with the cobalt chloride changes colour from a blue colour to a pink colour so as to be distinguishable from the blue colour of the base figure (31), indicating that the desiccant material (2) should be replaced.

2. A regenerative dehumidifying bag according to Claim 1, wherein said pouch (1) includes an opening (11) formed therein for filling the desiccant material (2) into an interior (10) of the pouch (1) and a fastener (12) for fastening and closing the opening (11) of the pouch (1) to seal the desiccant material (2) within the pouch (1).

3. A regenerative dehumidifying bag according to Claim 1 or 2 wherein said desiccant material (2) is silica gel.

4. A regenerative dehumidifying bag according to any one of the preceding claims wherein said humidity indicator (3) includes a plurality of color-changeable areas (32a, 32b, 32c and 32d) respectively corresponding to different predetermined relative humidities by means of a plurality of different cobalt chloride compositions respectively in said plurality of color-changeable areas (32a, 32b, 32c and 32d) in the humidity indicator (3).

5. A regenerative dehumidifying bag according to any one of the preceding claims wherein said pouch (12) further includes activated carbon added in said pouch (1).

## Patentansprüche

1. Regenerativer Entfeuchtungsbeutel, der Folgendes umfasst: einen wasserdampfdurchlässigen Sack (1), ein Entfeuchtungsmaterial (2), das in den Sack (1) gefüllt ist, um Feuchtigkeit durch den Sack (1) zu absorbieren, um eine Umgebung, in der der Sack (1) bereitgestellt ist, zu entfeuchten, und eine auf eine Außenoberfläche des Sacks (1) aufgedruckte Farbänderungsfeuchtigkeitsanzeige (3), die in Fluidkommunikation mit dem Entfeuchtungsmaterial (2) in dem Sack (1) steht,
**dadurch gekennzeichnet, dass**
die Feuchtigkeitsanzeige (3) ein Ausgangszeichen (31), das in blauer Farbe auf eine Außenoberfläche des Sacks (1) aufgedruckt ist, und eine Farbänderungsmarkierung (32) umfasst, die als Markierung innerhalb des Ausgangszeichens (31) der Feuchtigkeitsanzeige (3) vorliegt, wobei die Farbänderungsmarkierung (32) eine farbveränderliche Tinte oder Farbe umfasst, die homogen in einer hygroskopischen Kunststoffbeschichtung verteiltes und auf die Außenoberfläche des Sacks (1) aufgedrucktes Kobaltchlorid umfasst, wobei die Markierung (32) mit dem Kobaltchlorid, wenn das Entfeuchtungsmaterial (2) in dem Sack (1) mit absorbierter Feuchtigkeit gesättigt ist, ihre Farbe von blau zu rosa verändert, um von der blauen Farbe des Ausgangszeichens (31) unterscheidbar zu sein, wodurch angezeigt wird, dass das Entfeuchtungsmaterial (2) ausgetauscht werden sollte.

2. Regenerativer Entfeuchtungsbeutel nach Anspruch 1, worin der Sack (1) eine darin ausgebildete Öffnung (11), um das Entfeuchtungsmaterial (2) in das Innere (10) des Sacks (1) füllen zu können, und eine Verschlussvorrichtung (12) umfasst, um die Öffnung (11) des Sacks (1) zu zu machen und zu verschließen, um das Entfeuchtungsmaterial (2) in dem Sack (1) einzuschließen.

3. Regenerativer Entfeuchtungsbeutel nach Anspruch 1 oder 2, worin das Entfeuchtungsmaterial (2) Silicagel ist.

4. Regenerativer Entfeuchtungsbeutel nach einem der vorangegangenen Ansprüche, worin die Feuchtigkeitsanzeige (3) eine Vielzahl an Farbänderungsbereichen (32a, 32b, 32c, und 32d) umfasst, die durch eine Vielzahl verschiedener Kobaltchloridzusammensetzungen in der Vielzahl an Farbänderungsbereichen (32a, 32b, 32c und 32d) der Feuchtigkeitsanzeige (3) jeweils verschiedenen vorbestimmten relativen Feuchtigkeitswerten entsprechen.

5. Regenerativer Entfeuchtungsbeutel nach einem der vorangegangenen Ansprüche, worin der Sack (1) ferner Aktivkohle umfasst, die in den Sack (1) zugesetzt wird.

## Revendications

1. Sachet déshumidifiant régénérateur comprenant une poche perméable à la vapeur d'eau (1), un matériau dessiccateur (2) introduit dans la poche (1) pour absorber l'humidité à travers la poche (1) pour déshumidifier un environnement dans lequel la poche (1) est prévue, et un indicateur d'humidité (3) changeant de couleur imprimé sur une surface extérieure de la poche (1) et en communication fluidique avec la matériau dessiccateur (2) dans la poche (1) ;
**caractérisé en ce que** ledit indicateur d'humidité (3) comporte une figure de base (31) en couleur bleue imprimée sur une surface extérieure de la poche (1) et un marquage (32) changeant de couleur réalisé comme une marque disposée dans la figure de base (31) de l'indicateur d'humidité (3), ledit marquage (32) changeant de couleur comportant une encre ou peinture changeant de couleur comprenant du chlorure de cobalt dispersé d'une manière homogène dans un revêtement plastique hygroscopique et imprimé sur la surface extérieure de la poche (1), par quoi, lors de la saturation de l'humidité absorbée par le matériau dessiccateur (2) dans la poche (1), le marquage (32) avec le chlorure de cobalt change de couleur d'une couleur bleue à une couleur rose de manière à pouvoir être distinguée de la couleur bleue de la figure de base (31), indiquant que le matériau dessiccateur (2) devrait être remplacé.

2. Sachet déshumidifiant régénérateur selon la revendication 1, où ladite poche (1) comporte une ouverture (11) ménagée dans celle-ci pour introduire le matériau dessiccateur (2) dans un intérieur (10) de la poche (1) et une attache (12) pour attacher et fermer l'ouverture (11) de la poche (1) pour sceller le matériau dessiccateur (2) dans la poche (1).

3. Sachet déshumidifiant régénérateur selon la revendication 1 ou 2, dans lequel ledit matériau dessiccateur (2) est du gel de silice.

4. Sachet déshumidifiant régénérateur selon l'une quelconque des revendications précédentes, dans lequel ledit indicateur d'humidité (3) comporte plusieurs zones changeant de couleur (32a, 32b, 32c et 32d) correspondant respectivement à des humidités relatives différentes prédéterminées au moyen d'une pluralité de compositions de chlorure de cobalt différentes respectivement dans ladite pluralité de zones changeant de couleur (32a, 32b, 32c et 32d) dans l'indicateur d'humidité (3).

5. Sachet déshumidifiant régénérateur selon l'une quelconque des revendications précédentes, dans lequel ladite poche (12) comporte en outre du charbon actif ajouté dans ladite poche (1).
